# EUROPÄISCHE PATENTSCHRIFT

(11) **EP 2 585 241 B1**
(45) Veröffentlichungstag und Bekanntmachung des Hinweises auf die Patenterteilung: **08.07.2020**
(21) Anmeldenummer: 11722372.7
(22) Anmeldetag: 19.05.2011
(51) Int. Cl.: B23B 31/12, B23Q 3/12

(54) **HANDWERKZEUGMASCHINE MIT EINEM SCHLAGWERK**
HAND-HELD POWER TOOL COMPRISING A HAMMER MECHANISM
MACHINE-OUTIL PORTATIVE POURVUE D'UN MÉCANISME DE PERCUSSION

(30) Priorität: 23.06.2010 DE 102010030433
(43) Veröffentlichungstag der Anmeldung: 01.05.2013
(73) Patentinhaber: Robert Bosch GmbH, 70442 Stuttgart (DE)
(72) Erfinder: HECHT, Joachim, 71106 Magstadt (DE); KRAUS, Martin, 70794 Filderstadt (DE)
(86) Internationale Anmeldenummer: PCT/EP2011/058140
(87) Internationale Veröffentlichungsnummer: WO 2011/160902

(56) Entgegenhaltungen:
- EP-A2- 1 236 538
- EP-A2- 1 795 307
- DE-A1-102007 036 312
- GB-A- 2 381 225
- US-A- 5 951 026

## Beschreibung

### Stand der Technik

Die vorliegende Erfindung betrifft eine Handwerkzeugmaschine mit einer Werkzeugaufnahme zur Aufnahme mindestens eines ersten Werkzeugs, das einen mit einer ersten Kupplungskontur versehenen Schaft aufweist, der drehfest mit der Werkzeugaufnahme verbindbar ist, und mit einem Schlagwerk zum schlagenden Antrieb des mit der Werkzeugaufnahme verbundenen ersten Werkzeugs in axialer Richtung der Werkzeugaufnahme in einem der Handwerkzeugmaschine zugeordneten Schlagbetrieb.

Die DE 10 2007 048 822 A1 beschreibt eine derartige Handwerkzeugmaschine, bei der die Werkzeugaufnahme sowohl zur Aufnahme eines sogenannten SDS-Quick Mini-Bohrwerkzeugs, als auch zur Aufnahme eines sogenannten HEX-Bohrers oder eines Schrauberbits ausgebildet ist. Hierzu geeignete SDS-Quick Mini-Bohrwerkzeuge sind Bohrwerkzeuge, die einen im Wesentlichen zylindrischen Schaft mit zwei parallel zur Längsachse des Schafts überstehenden Drehmitnahmestegen aufweisen, die jeweils eine Verriegelungsaussparung aufweisen. Geeignete HEX-Bohrer und Schrauberbits sind Werkzeuge, die einen Schaft mit einem mindestens abschnittsweise hexagonalen Querschnitt haben, der bei HEX-Bohrern mit einer Ringnut versehen ist. Über ein der Handwerkzeugmaschine zugeordnetes Hammerschlagwerk mit einem Schlagbolzen bzw. Döpper ist ein jeweils in der Werkzeugaufnahme angeordnetes Werkzeug hämmernd bzw. schlagend antreibbar.

Nachteilig am Stand der Technik ist, dass die Werkzeugaufnahme dieser Handwerkzeugmaschine ausschließlich zur Aufnahme von Werkzeugen mit Kupplungskonturen vom SDS-Quick- oder HEX-Typ ausgebildet ist, aber nicht zur Aufnahme von Werkzeugen geeignet ist, deren Kupplungskontur z. B. vom Rundschafttyp ist, d. h. die einen Schaft mit rein kreisförmigem Querschnitt aufweisen.

Aus GB 2381225 A ist eine Bohrvorrichtung bekannt, bestehend aus einer eine Bohrspindel aufweisenden Bohrmaschine und aus einem Bohrfutter mit einem Futterkörper, der lösbar, drehfest und axial unverschiebbar mit der Bohrspindel koppelbar ist. Am Futterkörper ist ein Zapfen mit einer Kehlung angeordnet, in die ein Rastglied der Bohrspindel eingreifen kann.

Aus EP 1236538 A2 ist ein Wechselbohrfutter zur Anbringung an einer Bohrspindel bekannt, welches einen Haltemechanismus mit einem Halteelement aufweist. Das Halteelement befindet sich entweder in einer Halteposition zum Halten des Wechselbohrfutters an der Bohrspindel oder in einer Löseposition zum Lösen des Wechselbohrfutters von der Bohrspindel.

In DE 102007036312 A1 ist ein Schnellwechsel-Werkzeugfuttermodul beschrieben, welches ein Werkzeugfutter, ein Adapterelement zur Aufnahme in einen Schnellwechsel-Werkzeugfutterhalter einer Handwerkzeugmaschine sowie eine Staubschutzabdeckung des Adapterelements umfasst.

In EP 1795307 A2 ist ein Adapter zum Anbringen eines Einsatzwerkzeuges an einer schlagend antreibbaren Handwerkzeugmaschine offenbart, wobei der Adapter einen Einsteckschaft vom Typ SDS aufweist.

### Offenbarung der Erfindung

Eine Aufgabe der Erfindung ist es daher, eine neue Handwerkzeugmaschine bereitzustellen, die mit einer Vielzahl unterschiedlicher Werkzeuge mit verschiedenartigen Kupplungskonturen verwendbar ist.

Dieses Problem wird gelöst durch eine Handwerkzeugmaschine mit den Merkmalen des Anspruchs 1.

Die Erfindung ermöglicht somit die Bereitstellung einer Handwerkzeugmaschine, die durch Verwendung eines einfachen und kostengünstigen Werkzeugadapters mit unterschiedlichen Werkzeugen mit einer Vielzahl verschiedener Kupplungskonturen verwendbar ist.

Das erste Werkzeug ist bevorzugt zum Schlagbohren oder Schrauben und das zweite Werkzeug zum Bohren ausgebildet.

Somit kann auf einfache Art und Weise eine universell einsetzbare Handwerkzeugmaschine bereitgestellt werden.

Der Schaft des ersten Werkzeugs weist vorzugsweise einen kreisförmigen Querschnitt mit mindestens zwei diametral einander gegenüberliegenden, radialen Erweiterungen oder einen Mehrkant-Querschnitt auf, und der Schaft des zweiten Werkzeugs weist vorzugsweise einen kreisförmigen Querschnitt auf. Das erste

Werkzeug ist bevorzugt ein SDS-Mini-Werkzeug oder ein HEX-Werkzeug. Das zweite Werkzeug ist bevorzugt ein Rundschaftbohrer.

Die Erfindung ermöglicht somit durch den Einsatz eines kostengünstigen und zuverlässigen Spannfutteradapters die Verwendung der Handwerkzeugmaschine mit mehreren gebräuchlichen Werkzeugtypen.

Die Werkzeugaufnahme weist bevorzugt eine federbelastete Verriegelungshülse zur Verriegelung des ersten Werkzeugs in der Werkzeugaufnahme auf.

Somit kann das erste Werkzeug auf einfache Art und Weise in der Werkzeugaufnahme verriegelt werden.

Gemäß einer Ausführungsform weist der Spannfutteradapter einen mit der ersten Kupplungskontur versehenen Mitnahmeschaft zur drehfesten Verbindung mit der Werkzeugaufnahme auf.

Die Erfindung ermöglicht somit eine stabile und sichere Drehmitnahme des Spannfutteradapters durch die Werkzeugaufnahme.

Der Spannfutteradapter weist bevorzugt eine Betätigungshülse zur Verriegelung des Mitnahmeschafts in der Werkzeugaufnahme auf, die zur Betätigung der federbelasteten Verriegelungshülse ausgebildet ist.

Somit kann der Mitnahmeschaft des Spannfutteradapters auf einfache Art und Weise in der Werkzeugaufnahme verriegelt werden.

Die Betätigungshülse weist bevorzugt ein Mitnahmeglied zur Entriegelung der Werkzeugaufnahme durch eine Mitnahme der federbelasteten Verriegelungshülse in axialer Richtung auf.

Somit kann eine sichere und zuverlässige Betätigung der Verriegelungshülse gewährleistet werden.

Gemäß einer Ausführungsform ist die Betätigungshülse mit einer Rückstellfeder verbunden, die die Betätigungshülse axial in Richtung des Spannfutteradapters beaufschlagt, wobei die Betätigungshülse zur Betätigung der federbelasteten Verriegelungshülse gegen eine von der Rückstellfeder bereit gestellte Rückstellkraft axial in Richtung der Verriegelungshülse verschiebbar ist.

Die Erfindung ermöglicht somit die Bereitstellung einer einfach und schnell betätigbaren Betätigungshülse, die von der Rückstellfeder jeweils in Richtung einer zugeordneten Ausgangsposition beaufschlagt ist.

Gemäß einer weiteren Ausführungsform ist die Betätigungshülse zur Betätigung der federbelasteten Verriegelungshülse um eine dem Spannfutteradapter zugeordnete Längsachse drehbar.

Die Erfindung ermöglicht somit die Bereitstellung einer kostengünstigen Betätigungshülse.

Das Schlagwerk ist bevorzugt ein Hammerschlagwerk. Das Schlagwerk weist vorzugsweise einen Schlagbolzen auf, der dazu ausgebildet ist, das erste Werkzeug oder den Spannfutteradapter schlagend anzutreiben.

Somit kann auf einfache Art und Weise ein schlagender bzw. hämmernder Antrieb des ersten Werkzeugs oder des Spannfutteradapters realisiert werden.

Gemäß einer Ausführungsform ist die Handwerkzeugmaschine nach Art eines Bohrhammers mit Schrauberfunktion ausgebildet. Gemäß einer weiteren Ausführungsform ist die Handwerkzeugmaschine nach Art eines Akku-Schraubers mit integriertem Hammerschlagwerk ausgebildet.

Die vorliegende Erfindung kann somit bei einer Vielzahl unterschiedlich ausgebildeter Handwerkzeugmaschinen Anwendung finden.

Das Eingangs genannte Problem wird darüber hinaus gelöst durch einen Spannfutteradapter für eine Handwerkzeugmaschine, die eine Werkzeugaufnahme zur Aufnahme mindestens eines ersten Werkzeugs aufweist, das einen mit einer ersten Kupplungskontur versehenen Schaft aufweist, der drehfest mit der Werkzeugaufnahme verbindbar ist, und die mit einem Schlagwerk zum schlagenden Antrieb des mit der Werkzeugaufnahme verbundenen, ersten Werkzeugs in axialer Richtung der Werkzeugaufnahme in einem der Handwerkzeugmaschine zugeordneten Schlagbetrieb versehen ist. Der Spannfutteradapter ist drehfest mit der Werkzeugaufnahme verbindbar und ist zur Aufnahme mindestens eines zweiten Werkzeugs vorgesehen, das einen mit einer zweiten Kupplungskontur versehenen Schaft aufweist, der drehfest mit dem Spannfutteradapter verbindbar ist.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einer Werkzeugaufnahme und beispielhaften Werkzeugen gemäß einer Ausführungsform,
Fig. 2 eine Schnittansicht eines Ausschnitts der Handwerkzeugmaschine mit der Werkzeugaufnahme von Fig. 1,
Fig. 3 eine Schnittansicht eines durch Betätigung einer axial verschiebbaren Betätigungshülse mit der Werkzeugaufnahme von Fig. 2 verbindbaren Spannfutteradapters gemäß einer ersten Ausführungsform,
Fig. 4 eine Schnittansicht des mit der Werkzeugaufnahme von Fig. 2 verbundenen Spannfutteradapters von Fig. 3,
Fig. 5 eine Seitenansicht der Betätigungshülse des Spannfutteradapters von Fig. 3 mit einem Mitnahmeglied gemäß einer ersten Ausführungsform,
Fig. 6 eine perspektivische Ansicht einer proximalen Seite des Spannfutteradapters von Fig. 3,
Fig. 7 eine Schnittansicht eines durch Betätigung einer drehbaren Betätigungshülse mit der Werkzeugaufnahme von Fig. 2 verbindbaren Spannfutteradapters gemäß einer zweiten Ausführungsform, und
Fig. 8 eine Seitenansicht der Betätigungshülse des Spannfutteradapters von Fig. 7 mit einem Mitnahmeglied gemäß einer zweiten Ausführungsform.

### Beschreibung der Ausführungsbeispiele

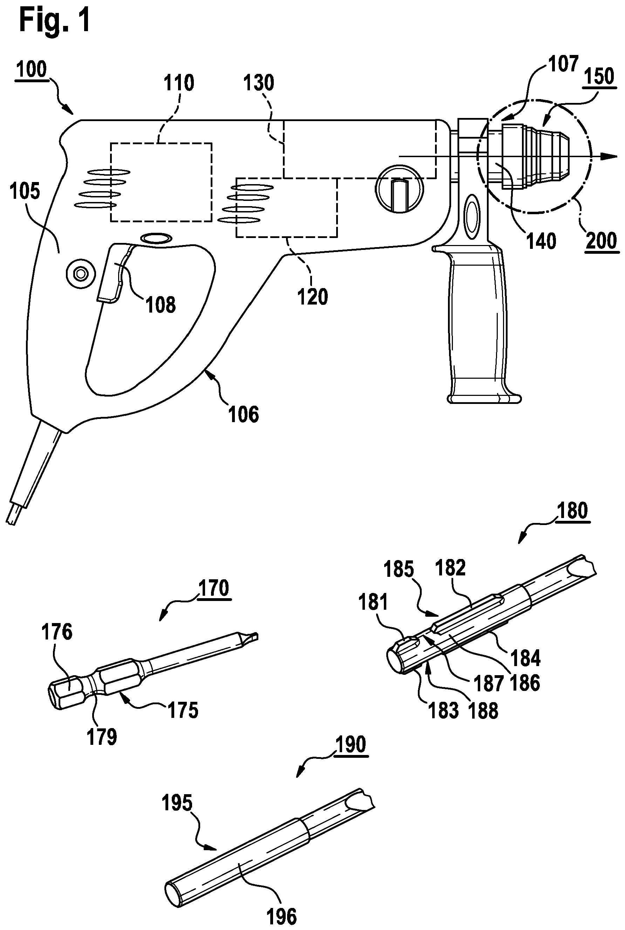

Fig. 1 zeigt eine Handwerkzeugmaschine 100, die gemäß einer ersten Ausführungsform nach Art eines Bohrhammers mit Schrauberfunktion ausgebildet ist, der illustrativ netzabhängig betreibbar ist. Die Handwerkzeugmaschine 100 hat ein Gehäuse 106, in dem eine von einem Elektromotor 110 ausgebildete Antriebseinheit vorgesehen ist. Diese ist über einen an einem Handgriff 105 vorgesehenen Schalter 108 ein- und ausschaltbar und dient zur Erzeugung eines Drehmoments, das über eine Getriebevorrichtung 120 auf ein Schlagwerk 130, insbesondere ein pneumatisches Schlagwerk und/oder ein Hammerschlagwerk, und/oder auf ein im Betrieb der Handwerkzeugmaschine 100 rotierendes, von einem Hammerrohr 140 gebildetes Abtriebsmittel übertragen wird, das am distalen Ende 107 der Handwerkzeugmaschine 100 angeordnet ist. Am Hammerrohr 140 ist illustrativ eine Werkzeugaufnahme 150 vorgesehen.

Die Werkzeugaufnahme 150 ist zur Aufnahme mindestens eines ersten Werkzeugs ausgebildet, das einen drehfest mit der Werkzeugaufnahme 150 verbindbaren Schaft aufweist. Illustrativ ist die Werkzeugaufnahme 150 mit einem Werkzeug 170 verbindbar, das einen Schaft 176 mit einer Kupplungskontur 175 aufweist, die von einem Mehrkant-, insbesondere Achtkant-Querschnitt des Schafts 176 und einer an diesem vorgesehenen Ringnut 179 gebildet wird. Darüber hinaus ist die Werkzeugaufnahme 150 mit einem Werkzeug 180 verbindbar, das einen Schaft 186 mit einer Kupplungskontur 185 aufweist, die von einem kreisförmigen Querschnitt des Schafts 186 mit mindestens zwei diametral einander gegenüberliegenden, radialen Erweiterungen 181, 182 bzw. 183, 184 mit zugeordneten Verriegelungssaussparungen 187, 188 gebildet wird.

Gemäß einer Ausführungsform ist die Werkzeugaufnahme 150 nach Art einer SDS-Quick-Werkzeugaufnahme ausgebildet, wobei das Werkzeug 170 illustrativ ein Schrauberbit vom HEX-Typ ist, alternativ auch z. B. als HEX-Bohrer ausgebildet sein kann, und das Werkzeug 180 illustrativ ein Hammerbohrer vom SDS-Quick-Typ ist. Die Handwerkzeugmaschine 100 kann somit unter Verwendung des Werkzeugs 170 zum Schrauben und unter Verwendung des Werkzeugs 180 zum Bohren oder Schlagbohren verwendet werden. Es wird jedoch darauf hingewiesen, dass die vorliegende Erfindung nicht auf SDS-Quick-Werkzeugaufnahmen beschränkt ist, sondern vielmehr ganz allgemein sowohl bei SDS-Quick-, als auch bei SDS-Plus-Werkzeugaufnahmen und/oder Bit-Werkzeugaufnahmen Anwendung finden kann. Zur Vereinfachung der folgenden Beschreibung wird deshalb in Bezug auf SDS-Quick- und SDS-Plus-Werkzeugaufnahmen und -Mini-Werkzeuge lediglich auf "SDS-Werkzeugaufnahmen" oder "SDS-Mini-Werkzeuge" Bezug genommen.

Darüber hinaus ist die vorliegende Erfindung nicht auf netzabhängig betreibbare Bohrhämmer beschränkt, sondern kann bei einer Vielzahl von Elektrowerkzeugen Anwendung finden, die mit einer SDS- oder einer Bit-Werkzeugaufnahme versehen sind, unabhängig davon, ob diese Elektrowerkzeuge netzabhängig oder Akku-betrieben ausgeführt sind. Z. B. kann die Handwerkzeugmaschine 100 gemäß einer Ausführungsform nach Art eines Akku-Schraubers mit integriertem Hammerschlagwerk ausgebildet sein. Die Funktionsweise und der Aufbau einer geeigneten Handwerkzeugmaschine sowie einer geeigneten SDS- oder Bit-Werkzeugaufnahme sind aus dem Stand der Technik hinreichend bekannt, sodass hier zwecks Knappheit der Beschreibung auf eine eingehende Beschreibung verzichtet wird.

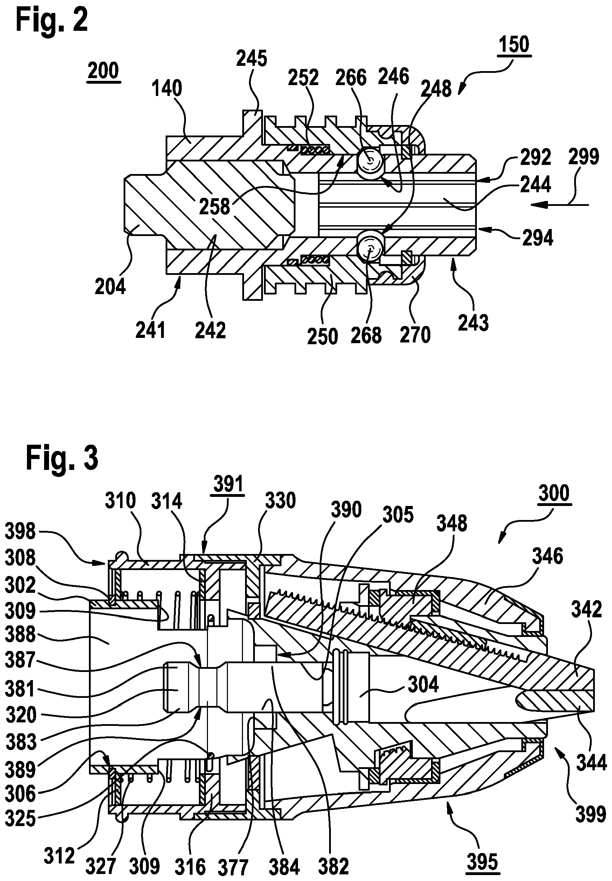

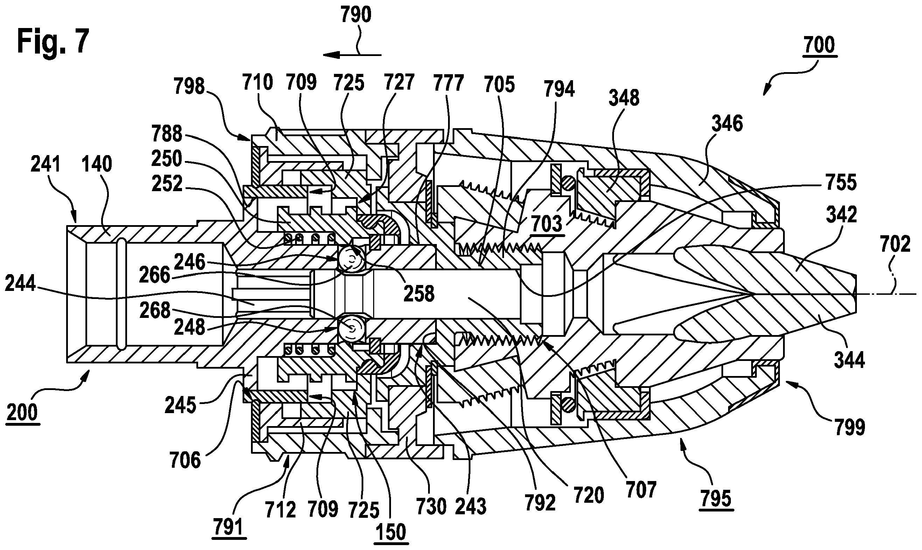

Gemäß einer Ausführungsform ist ein mit der Werkzeugaufnahme 150 verbindbarer Spannfutteradapter (300 in Fig. 3 oder 700 in Fig. 7) vorgesehen, um eine Verwendung mindestens eines zweiten Werkzeugs mit der Handwerkzeugmaschine 100 zu ermöglichen, das nicht drehfest mit der Werkzeugaufnahme 150 verbindbar ist. Z. B. ist ein illustrativ als Rundschaftbohrer ausgebildetes Werkzeug 190 mit einem Schaft 196, der eine Kupplungskontur 195 aufweist, die von einem kreisförmigen Querschnitt des Schafts 196 gebildet wird, nicht drehfest mit der Werkzeugaufnahme 150 verbindbar.

Fig. 2 zeigt eine vergrößerte Schnittansicht eines Ausschnitts 200 von Fig. 1, der das Hammerrohr 140 mit der daran angeordneten, beispielhaften Werkzeugaufnahme 150 illustriert. Am proximalen Ende 241 des mit einem äußeren, ringförmigen Flansch 245 versehenen Hammerrohrs 140 ist ein innerer Hohlraum 242 ausgebildet, in dem ein Schlagbolzen bzw. Döpper 204 axial verschiebbar angeordnet ist und der sich in eine am distalen Ende 243 des Hammerrohrs 140 vorgesehene Innenaufnahme 244, illustrativ eine SDS-Innenaufnahme mit Achtkantprofil, verjüngt. Diese hat laterale Führungsnuten 292, 294 und dient zur Aufnahme des Werkzeugs 170 oder 180 von Fig. 1, dass hierzu in Richtung eines Pfeils 299 in die Innenaufnahme 244 eingeschoben wird.

Zur Verriegelung des Werkzeugs 170, 180 von Fig. 1 in der Innenaufnahme 244 sind am Hammerrohr 140 im Bereich der Innenaufnahme 244 zwei radiale Öffnungen 246, 248 ausgebildet, in denen Verriegelungskugeln 266 bzw. 268 angeordnet sind. Diese sind in Fig. 2 in einer zugeordneten Entriegelungsposition gezeigt. Darüber hinaus ist im Bereich der Innenaufnahme 244 eine Verriegelungshülse 250 angeordnet, die axial verschiebbar am Außenumfang des Hammerrohrs 140 gelagert ist und einen inneren Ringkragen 258 aufweist. Zwischen diesem Ringkragen 258 und dem Hammerrohr 140 ist eine Druckfeder 252 vorgesehen, die die Verriegelungshülse 250 in Richtung einer zugeordneten Verriegelungsposition beaufschlagt. Zur Abdichtung der Werkzeugaufnahme 150 ist ein hülsenförmiges Dichtelement 270 vorgesehen, um diese insbesondere gegen ein Eintreten von Schmutz und Staub im Betrieb der Handwerkzeugmaschine 100 von Fig. 1 zu schützen und somit eine Beeinträchtigung ihrer Funktionalität zu verhindern.

Bei einer Befestigung des Werkzeugs 170 oder 180 von Fig. 1 in der Werkzeugaufnahme 150 wird die Verriegelungshülse 250 in Richtung eines Pfeils 299 axial gegen die Kraft der Druckfeder 252 verschoben, bis die Hülse 250 von dem Flansch 245 blockiert wird und somit die gezeigte Entriegelungsposition erreicht ist. Hierbei gibt der Ringkragen 258 die Verriegelungskugeln 266, 268 frei, die somit beim Einschieben des Werkzeugs 170 oder 180 von Fig. 1 in die Innenaufnahme 244 von diesem nach radial auswärts gedrückt werden können. Anschließend wird die Verriegelungshülse 250 freigegeben und somit von der Druckfeder 252 gegen die Richtung des Pfeils 299 axial in die Verriegelungsposition geschoben, wobei der Ringkragen 258 die Verriegelungskugeln 266, 268 nach radial einwärts drückt und fixiert. Im Betrieb der Handwerkzeugmaschine 100 von Fig. 1 erfolgt dann eine Drehmitnahme des Werkzeugs 170 oder 180 von Fig. 1 durch die Innenaufnahme 244, wobei der Schlagbolzen 204 durch Schläge in axialer Richtung gegen die Richtung des Pfeils 299 das Werkzeug 170 oder 180 schlagend bzw. hämmernd antreiben kann. Ein derartiger schlagender bzw. hämmernder Antrieb ist aus dem Stand der Technik hinreichend bekannt, sodass hier zwecks Knappheit der Beschreibung auf eine eingehende Beschreibung verzichtet wird.

Fig. 3 zeigt eine beispielhafte erste Ausführungsform eines Spannfutteradapters 300 zur Verwendung mit der Werkzeugaufnahme 150 von Fig. 1 und 2, der illustrativ in seinem proximalen Endbereich 398 einen Adapterabschnitt 391 zur drehfesten Befestigung an der Werkzeugaufnahme 150 aufweist. In seinem distalen Endbereich 399 ist ein mit dem Adapterabschnitt 391 über einen Tragkörper 302 verbundener Spannfutterabschnitt 395 zur drehfesten Aufnahme des Werkzeugs 190 von Fig. 1 vorgesehen.

An dem Tragkörper 302 sind illustrativ eine vorgegebene Anzahl von Spannkörpern 342, 344, z. B. drei oder vier, zum drehfesten Einspannen des Werkzeugs 190 von Fig. 1 angeordnet, sowie eine Spannhülse 346, die den Spannfutterabschnitt 395 im Wesentlichen ummantelt. Die Spannhülse 346 dient zur Betätigung einer Spannvorrichtung 348, mit der die Spannkörper 342, 344 gegen das dazwischen angeordnete Werkzeug 190 von Fig. 1 spannbar sind. Es wird jedoch darauf hingewiesen, dass der Aufbau und die Funktionalität eines geeigneten Spannfutters aus dem Stand der Technik hinreichend bekannt sind, sodass hier zwecks Knappheit der Beschreibung auf eine eingehende Beschreibung verzichtet wird.

Der Tragkörper 302 weist beispielhaft eine zylindrische Aussparung 305 auf, die an einem axialen Ende mit einer Befestigungsvorrichtung 304 versehen ist und am anderen axialen Ende eine kragenartige Erweiterung 390 hat. In der zylindrischen Aussparung 305 ist ein dem Adapterabschnitt 391 zugeordneter Mitnahmeschaft 320 angeordnet, der an der Befestigungsvorrichtung 304 befestigt ist oder z. B. einstückig mit dem Tragkörper 302 ausgebildet oder an diesen angeformt ist und zumindest abschnittsweise in einen vom Tragkörper 302 gebildeten Innenraum 388 hineinragt. Mit der kragenartigen Erweiterung 390 bildet der Mitnahmeschaft 320 eine Ringnut 377 aus und ist zur drehfesten Lagerung in der Innenaufnahme 244 der Werkzeugaufnahme 150 von Fig. 2 ausgebildet. Dementsprechend hat der Mitnahmeschaft 320 z. B. einen etwa kreisförmigen Querschnitt mit radialen Erweiterungen 381, 382, 383, 384 und Verriegelungsaussparungen 387, 389, d. h. der Mitnahmeschaft 320 ist illustrativ wie der Schaft 186 des Werkzeugs 180 von Fig. 1 ausgebildet.

Gemäß einer Ausführungsform hat der Tragkörper 302 im Bereich des Adapterabschnitts 391 mindestens eine fensterartige Aussparung 309, in der ein Mitnahmeglied 325 zumindest abschnittsweise axial verschiebbar angeordnet ist. Bevorzugt sind zwei diametral gegenüberliegende Aussparungen 309 vorgesehen, wie in Fig. 3 gezeigt.

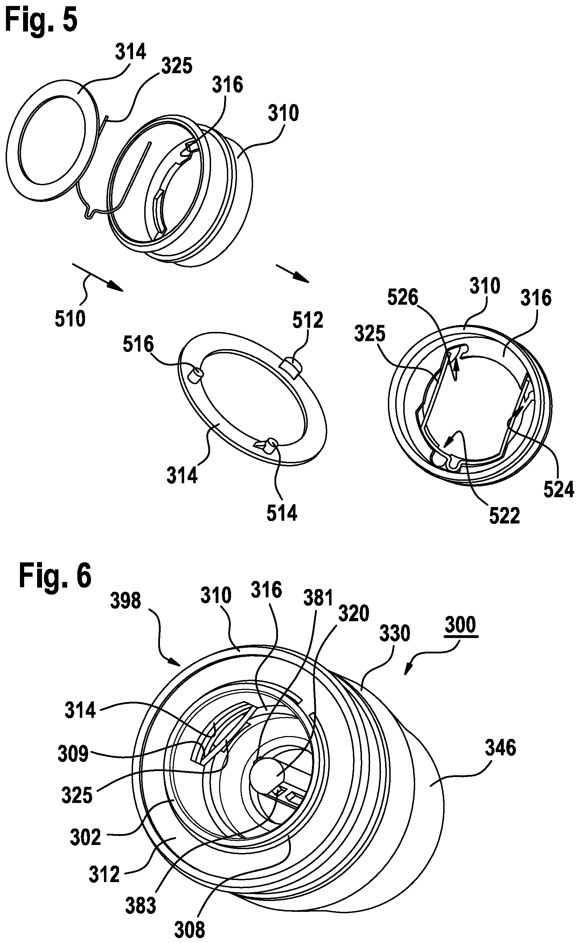

Das Mitnahmeglied 325 ist mit einem ersten Haltering 314 an einem inneren Ringflansch 316 fixiert, der an einer am Tragkörper 302 axial verschiebbar gelagerten Betätigungshülse 310 ausgebildet ist, wie unten bei Fig. 5 beschrieben. Zwischen dem ersten Haltering 314 und einem zweiten Haltering 312 ist eine als Druckfeder ausgebildete Rückstellfeder 327 angeordnet. Hierbei ist der zweite Haltering 312 beispielhaft von einem Sicherungsring 308, der in einer am proximalen Ende 398 des Spannfutteradapters 300 am Tragkörper 302 vorgesehenen äußeren Ringnut 306 angeordnet ist, von der Rückstellfeder 327 in einer axialen Endposition blockiert, sodass diese den ersten Haltering 314 und somit die Betätigungshülse 310 mit einer vorgegebenen Rückstellkraft in Richtung des Spannfutterabschnitts 395 beaufschlagt.

Illustrativ ist zwischen der Betätigungshülse 310 und der Spannhülse 346 eine Abdeckhülse 330 als Sichtblende und zum Schutz des Adapterabschnitts 391 vor Schmutz und Staub angeordnet. Diese ist bevorzugt axial unbeweglich und drehfest am Tragkörper 302 befestigt.

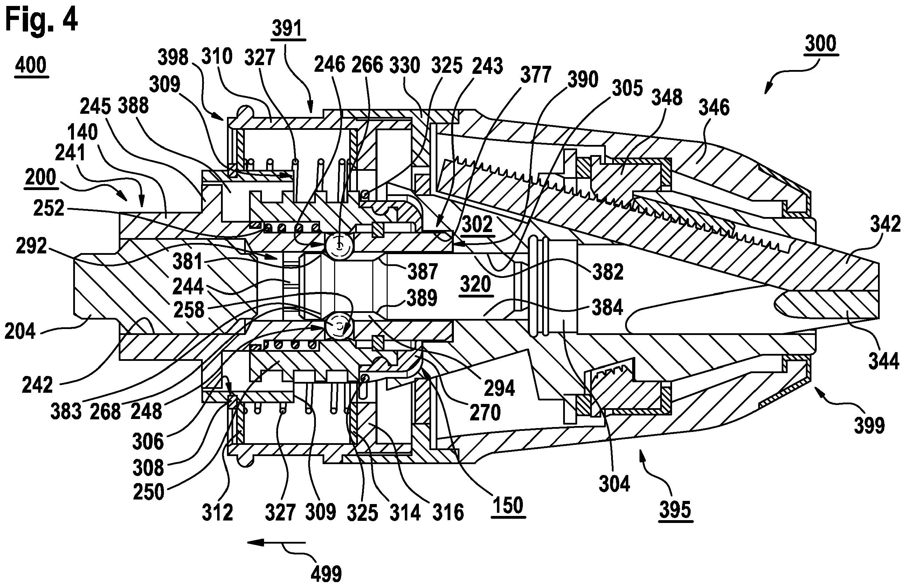

Fig. 4 zeigt eine Anordnung 400 mit dem mit der Anordnung 200 von Fig. 2 verbundenen Spannfutteradapter 300 von Fig. 3. Dieser ist illustrativ drehfest, aber axial verschiebbar an der Werkzeugaufnahme 150 von Fig. 1 und 2 gelagert, wie nachfolgend beschrieben.

Zur Verbindung des Spannfutteradapters 300 mit der Werkzeugaufnahme 150 wird dieser mit seinem proximalen Endbereich 398 derart in Richtung eines Pfeils 499 auf die Werkzeugaufnahme 150 aufgeschoben, dass der Mitnahmeschaft 320 in die Innenaufnahme 244 eingreift und der Tragkörper 302 die Verriegelungshülse 250 und die Dichthülse 270 umgreift. Hierbei werden die radialen Erweiterungen 381, 382, 383, 384 des Mitnahmeschafts 320 in den Führungsnuten 292 bzw. 294 der Innenaufnahme 244 geführt. Da die Verriegelungshülse 250 zunächst von der Druckfeder 252 in ihrer in Fig. 4 gezeigten Verriegelungsposition gehalten wird, sind die Verriegelungskugeln 266, 268 von dem Ringkragen 258 nach radial einwärts blockiert und verhindern somit durch ein Blockieren der radialen Erweiterungen 381 bzw. 383 ein vollständiges Einschieben des Mitnahmeschafts 320 in die Innenaufnahme 244.

Durch ein Betätigen der Betätigungshülse 310, d. h. durch ein axiales Verschieben bzw. Ziehen der Betätigungshülse 310 in Richtung des Pfeils 499 wird diese zumindest abschnittsweise gegen die Kraft der Rückstellfeder 327 aus der Abdeckhülse 330 ausgefahren und das Mitnahmeglied 325 wird in den fensterartigen Aussparungen 309 des Tragkörpers 302 in Richtung des Pfeils 499 verschoben. Hierbei drückt das Mitnahmeglied 325 gegen die Verriegelungshülse 250 und bewirkt somit eine axiale Verschiebung der Verriegelungshülse 250 gegen die Kraft der Druckfeder 252 in Richtung des Pfeils 499, bis die Verriegelungshülse 250 die in Fig. 2 gezeigte Entriegelungsposition erreicht und die Verriegelungskugeln 266, 268 freigibt.

Da der Tragkörper 302 hierbei von der Rückstellfeder 327 durch eine von dieser gegen den zweiten Haltering 312 ausgeübten Kraft in Richtung des Pfeils 499 beaufschlagt wird, kann der Tragkörper 302 nun durch diese Kraft axial in die Richtung des Pfeils 499 verschoben werden, wobei die radialen Erweiterungen 381, 383 des Mitnahmeschafts 320 die freigegebenen Verriegelungskugeln 266 bzw. 268 nach radial auswärts verschieben, bis diese im Bereich der Verriegelungsaussparungen 387 bzw. 389 des Mitnahmeschafts 320 angeordnet sind. Bei dieser axialen Verschiebung umgreift der Tragkörper 302 den am proximalen Ende 241 des Hammerrohrs 140 vorgesehenen, ringförmigen Flansch 245 und das distale Ende 243 des Hammerrohrs 140 wird in die Ringnut 377 eingeschoben und dort von der kragenartigen Erweiterung 390 axial blockiert.

Durch ein Freigegeben der Betätigungshülse 310 wird die Verbindung des Spannfutteradapters 300 mit der Werkzeugaufnahme 150 abgeschlossen, wobei die Betätigungshülse 310 durch die Rückstellkraft der Rückstellfeder 327 axial in Richtung des Spannfutterabschnitts 395 in die Abdeckhülse 330 in ihre Ausgangsposition zurück verfahren wird. Hierbei gibt das Mitnahmeglied 325 die Verriegelungshülse 250 frei, sodass diese von der Druckfeder 252 axial in ihre Verriegelungsposition zurück geschoben wird, in der der Ringkragen 258 die Verriegelungskugeln 266, 268 in den Verriegelungsaussparungen 387 bzw. 389 des Mitnahmeschafts 320 blockiert. Der Mitnahmeschaft 320 ist somit axial in der Innenaufnahme 244 blockiert, illustrativ mit einem vorgegebenen axialen Spiel, und die in die Führungsnuten 292, 294 eingreifenden, radialen Erweiterungen 381, 382, 383, 384 sind drehfest mit dieser verbunden.

Wie aus Fig. 4 ersichtlich, ist die Verbindung zwischen Spannfutteradapter 300 und Werkzeugaufnahme 150 derart ausgebildet, dass der Mitnahmeschaft 320 im Betrieb der Handwerkzeugmaschine 100 von Fig. 1 in der Innenaufnahme 244 verriegelt ist und eine Drehmitnahme des Mitnahmeschafts 320 über die Innenaufnahme 244 erfolgt. Eine Zentrierung des Spannfutteradapters 300 an der Werkzeugaufnahme 150 erfolgt hierbei einerseits durch das in die Ringnut 377 eingreifende, distale Ende 243 des Hammerrohrs 140, und andererseits durch den vom Tragkörper 302 umschlossenen, ringförmigen Flansch 245 am proximalen Ende 241 des Hammerrohrs 140, sodass im Betrieb der Handwerkzeugmaschine 100 von Fig. 1 verbesserte Rundlaufeigenschaften des Spannfutteradapters 300 erreicht werden. Es wird jedoch darauf hingewiesen, dass bereits eine ausschließlich über das in die Ringnut 377 eingreifende, distale Ende 243 des Hammerrohrs 140 oder über den vom Tragkörper 302 umschlossenen, ringförmigen Flansch 245 erfolgende Zentrierung zu verbesserten Rundlaufeigenschaften führt.

Zum Lösen der Verbindung zwischen Spannfutteradapter 300 und Werkzeugaufnahme 150 wird die Verriegelungshülse 250 durch Betätigen der Betätigungshülse 310 wie oben beschrieben in die Entriegelungsposition verfahren. Der Spannfutteradapter 300 kann dann von der Werkzeugaufnahme 150 abgezogen werden.

Fig. 5 zeigt den ersten Haltering 314 und das beispielhaft als U-förmiges Runddrahtelement ausgebildete Mitnahmeglied 325 bei einer illustrativen Montage an der mit dem inneren Ringflansch 316 versehenen Betätigungshülse 310 von Fig. 3. Hierzu wird zunächst das Mitnahmeglied 325 und anschließend der erste Haltering 314 in Richtung eines Pfeils 510 in die Betätigungshülse 310 eingeführt.

Gemäß einer Ausführungsform sind am Ringflansch 316 der Betätigungshülse 310 mit Öffnungen kombinierte Aussparungen 522, 524, 526 vorgesehen, die einerseits zur Aufnahme des Mitnahmeglieds 325 und andererseits zur Aufnahme oder Durchführung von Positioniergliedern 512, 514 bzw. 516 ausgebildet sind. Diese sind illustrativ am ersten Haltering 314 vorgesehen, z. B. angeformt.

Es wird jedoch darauf hingewiesen, dass die gezeigte Ausführungsform des Mitnahmeglieds 325 nach Art eines U-förmigen Runddrahtelements lediglich beispielhaften Charakter hat und nicht als Einschränkung der Erfindung zu verstehen ist. Vielmehr sind eine Vielzahl unterschiedlicher Ausführungen möglich, die dem Fachmann geläufig sind und eine erforderliche Mitnahmefunktionalität des Mitnahmeglieds 325 gewährleisten. Z. B. können anstelle des gezeigten Mitnahmeglieds 325 zwei separate Flachdrahtelemente Anwendung finden. Darüber hinaus wird darauf hingewiesen, dass die gezeigte Montage lediglich illustrativen Charakter hat, um eine entsprechende Verbindung zwischen Haltering 314, Mitnahmeglied 325 und Betätigungshülse 310 zu verdeutlichen. Allerdings erfolgt diese Montage letztendlich am Tragkörper 302 von Fig. 3.

Fig. 6 zeigt den proximalen Endbereich 398 des Spannfutteradapters 300 von Fig. 3 und verdeutlicht den zur Blockierung des zweiten Halterings 312 am Tragkörper 302 befestigten Sicherungsring 308. Darüber hinaus verdeutlicht Fig. 6 die im Tragkörper 302 vorgesehene fensterartige Aussparung 309, in die das am Ringflansch 316 fixierte Mitnahmeglied 325 hinein ragt, sowie eine beispielhafte Ausgestaltung des Mitnahmeschafts 320.

Fig. 7 zeigt eine beispielhafte zweite Ausführungsform eines Spannfutteradapters 700 zur Verwendung mit der Werkzeugaufnahme 150 von Fig. 1 und 2, der illustrativ in seinem proximalen Endbereich 798 einen Adapterabschnitt 791 zur drehfesten Befestigung an der Werkzeugaufnahme 150 aufweist. In seinem distalen Endbereich 799 ist ein mit dem Adapterabschnitt 791 verbundener Spannfutterabschnitt 795 zur drehfesten Aufnahme des Werkzeugs 190 von Fig. 1 vorgesehen. Im Gegensatz zum Spannfutterabschnitt 395 von Fig. 3 hat der Spannfutterabschnitt 795 einen ersten Tragkörper 703 mit einer Aussparung 705, in dem ein distaler Endbereich 707 eines dem Adapterabschnitt 791 zugeordneten, zweiten Tragkörpers 794 befestigt ist, z. B. durch Einpressen. Ansonsten entspricht der Spannfutterabschnitt 795 im Wesentlichen dem Spannfutterabschnitt 395.

Der zweite Tragkörper 794 weist beispielhaft eine zylindrische Aussparung 755 auf, die an einem axialen Ende eine kragenartige Erweiterung 792 hat. In der zylindrischen Aussparung 755 ist ein Mitnahmeschaft 720 drehfest und im Wesentlichen axial unbeweglich angeordnet, z. B. eingepresst oder einstückig mit dem Tragkörper 794 ausgebildet bzw. an diesen angeformt, und ragt zumindest abschnittsweise in einen vom Tragkörper 794 gebildeten Innenraum 788 hinein. Mit der kragenartigen Erweiterung 792 bildet der Mitnahmeschaft 720 eine Ringnut 777 aus und ist zur drehfesten Lagerung in der Innenaufnahme 244 der Werkzeugaufnahme 150 von Fig. 2 ausgebildet. Z. B. ist der Mitnahmeschaft 720 wie der Mitnahmeschaft 320 von Fig. 3 ausgebildet, sodass hier zwecks Knappheit der Beschreibung auf eine eingehende Beschreibung verzichtet werden kann.

Gemäß einer Ausführungsform hat der zweite Tragkörper 794 mindestens eine fensterartige Aussparung 709, in die mindestens ein mit einer inneren Mitnahmeschulter 727 versehenes Mitnahmeglied 725 eingreift. Bevorzugt sind zwei diametral gegenüberliegende Aussparungen 709 vorgesehen, in die zwei separate Mitnahmeglieder 725 eingreifen.

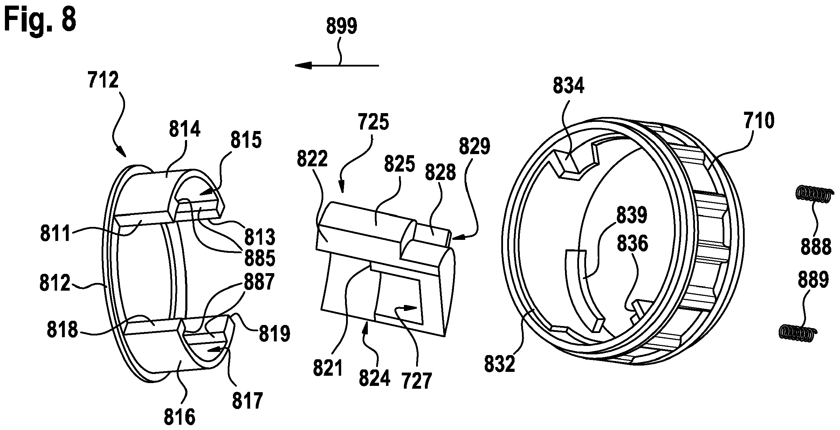

Das Mitnahmeglied 725 ist wie bei Fig. 8 beschrieben axial verschiebbar an einem Tragring 712 gelagert, der drehfest und axial unbeweglich in einer am proximalen Ende 798 des Spannfutteradapters 700 am Tragkörper 794 vorgesehenen Ringnut 706 fixiert ist. Darüber hinaus ist eine das Mitnahmeglied 725 und zumindest abschnittsweise den Tragkörper 794 umschließende Betätigungshülse 710 drehbar, aber axial unbeweglich am Tragring 712 gelagert, wobei zwischen Hülse 710 und Tragring 712 mindestens eine Rückstellfeder (888, 889 in Fig. 8) angeordnet ist, wie unten bei Fig. 8 beschrieben. Die Betätigungshülse 710 greift drehbar in eine bevorzugt axial unbeweglich und drehfest am Tragkörper 794 befestigte Abdeckhülse 730 ein, die als Sichtblende und zum Schutz des Adapterabschnitts 791 vor Schmutz und Staub vorgesehen ist und ein Zwischenglied zum Spannfutterabschnitt 795 bildet.

Zur Verbindung des Spannfutteradapters 700 mit der Werkzeugaufnahme 150 von Fig. 2 wird dieser mit seinem proximalen Endbereich 798 derart in Richtung eines Pfeils 790 auf die Werkzeugaufnahme 150 aufgeschoben, dass der Mitnahmeschaft 720 in die Innenaufnahme 244 eingreift und der Tragkörper 794 die Verriegelungshülse 250 und die Dichthülse 270 umgreift. Da die Verriegelungshülse 250 zunächst wie oben beschrieben von der Druckfeder 252 in ihrer Verriegelungsposition gehalten wird, sind die Verriegelungskugeln 266, 268 von dem Ringkragen 258 nach radial einwärts blockiert und verhindern somit durch ein Blockieren der radialen Erweiterungen 381 bzw. 383 ein vollständiges Einschieben des Mitnahmeschafts 720 in die Innenaufnahme 244.

Durch ein Betätigen der Betätigungshülse 710, d. h. durch ein radiales Drehen der Betätigungshülse 710 um eine Längsachse 702 des Spannfutteradapters 700 gegen die Kraft der Rückstellfeder (888, 889 in Fig. 8) wird dann das Mitnahmeglied 725 in den fensterartigen Aussparungen 709 des Tragkörpers 794 axial in Richtung des Pfeils 790 verschoben. Hierdurch drückt die Mitnahmeschulter 727 des Mitnahmeglieds 725 gegen die Verriegelungshülse 250 und bewirkt somit eine axiale Verschiebung der Verriegelungshülse 250 gegen die Kraft der Druckfeder 252 in Richtung des Pfeils 790, bis die Verriegelungshülse 250 die in Fig. 2 gezeigte Entriegelungsposition erreicht und die Verriegelungskugeln 266, 268 freigibt. Hierbei wird der Tragkörper 794 durch eine ziehende Bewegung in die Richtung des Pfeils 790 axial verschoben, bis der Tragkörper 794 den am proximalen Ende 241 des Hammerrohrs 140 vorgesehenen, ringförmigen Flansch 245 umgreift, wobei der Mitnahmeschaft 720 vollständig in die Innenaufnahme 244 eingeschoben wird und das Hammerrohr 140 mit seinem distalen Ende 243 in die Ringnut 777 eingreift und dort von der kragenartigen Erweiterung 792 axial blockiert wird.

Durch ein Freigegeben der Betätigungshülse 710 wird die Verbindung des Spannfutteradapters 700 mit der Werkzeugaufnahme 150 abgeschlossen, wobei die Betätigungshülse 710 durch die Rückstellkraft der Rückstellfeder (888, 889 in Fig. 8) um die Längsachse 702 in ihre Ausgangsposition zurück gedreht wird. Hierbei gibt das Mitnahmeglied 725 die Verriegelungshülse 250 frei, sodass diese von der Druckfeder 252 axial in ihre Verriegelungsposition zurück geschoben wird, in der der Ringkragen 258 die Verriegelungskugeln 266, 268 wie bei Fig. 4 beschrieben in ihrer radial einwärts ausgerichteten Position blockiert. Der Mitnahmeschaft 720 ist somit illustrativ mit einem vorgegebenen axialen Spiel und drehfest in der Innenaufnahme 244 blockiert.

Wie aus Fig. 7 ersichtlich, ist die Verbindung zwischen Spannfutteradapter 700 und Werkzeugaufnahme 150 derart ausgebildet, dass der Mitnahmeschaft 720 im Betrieb der Handwerkzeugmaschine 100 von Fig. 1 in der Innenaufnahme 244 verriegelt ist und eine Drehmitnahme des Mitnahmeschafts 720 über die Innenaufnahme 244 erfolgt. Eine Zentrierung des Spannfutteradapters 700 an der Werkzeugaufnahme 150 erfolgt hierbei einerseits durch das in die Ringnut 777 eingreifende, distale Ende 243 des Hammerrohrs 140, und andererseits durch den vom Tragkörper 794 umschlossenen, ringförmigen Flansch 245 am proximalen Ende 241 des Hammerrohrs 140, sodass im Betrieb der Handwerkzeugmaschine 100 von Fig. 1 verbesserte Rundlaufeigenschaften des Spannfutteradapters 700 erreicht werden. Es wird jedoch darauf hingewiesen, dass bereits eine ausschließlich über das in die Ringnut 777 eingreifende, distale Ende 243 des Hammerrohrs 140 oder über den vom Tragkörper 794 umschlossenen, ringförmigen Flansch 245 erfolgende Zentrierung zu verbesserten Rundlaufeigenschaften führt.

Zum Lösen der Verbindung zwischen Spannfutteradapter 700 und Werkzeugaufnahme 150 wird die Verriegelungshülse 250 durch Verdrehen der Betätigungshülse 710 wie oben beschrieben in die Entriegelungsposition verfahren. Der Spannfutteradapter 700 kann dann von der Werkzeugaufnahme 150 abgezogen werden.

Fig. 8 zeigt den Tragring 712 und das Mitnahmeglied 725 von Fig. 7 bei einer illustrativen Montage an der Betätigungshülse 710 von Fig. 7. Der Tragring 712 weist beispielhaft einen Ringabschnitt 812 auf, an dem in axialer Richtung ein erster Halteabschnitt 814 mit äußeren Wandabschnitten 811, 813 und ein zweiter Halteabschnitt 816 mit äußeren Wandabschnitten 818, 819 vorgesehen, bevorzugt angeformt sind.

Gemäß einer Ausführungsform wird zunächst das Mitnahmeglied 725 derart in eine am ersten Halteabschnitt 814 des Tragrings 712 ausgebildete Aussparung 815 eingeführt, dass das Mitnahmeglied 725 drehfest mit dem Halteabschnitt 814 verbunden ist, aber dessen Seitenwände 822, 824 an Begrenzungswänden 885 der Aussparung 815 axial verschiebbar sind. Anschließend wird die Betätigungshülse 710 in Richtung des Pfeils 899 auf den Tragring 712 aufgeschoben.

Es wird darauf hingewiesen, dass in Fig. 8 nur ein einzelnes Mitnahmeglied 725 gezeigt ist, das illustrativ nach Art eines kreisbogenförmigen Blocks 825 mit einem Öffnungswinkel von etwa 60° ausgebildet ist, an dem eine erste innere Schulter 821, die innere Mitnahmeschulter 727, sowie ein äußerer Schiebesteg 828 mit einer Schiebefläche 829 vorgesehen sind. Wie bei Fig. 7 beschrieben, findet bevorzugt ein zweites Mitnahmeglied 725 Anwendung, das in einer am zweiten Halteabschnitt 816 des Tragrings 712 ausgebildeten Aussparung 817 mit Begrenzungswänden 887 drehfest und axial verschiebbar angeordnet ist.

Gemäß einer Ausführungsform wird der Tragring 712 derart in der Betätigungshülse 710 angeordnet, dass der Ringabschnitt 812 gegen einen am Innenumfang der Hülse 710 vorgesehenen, ringförmigen Vorsprung 832 anliegt, an dem darüber hinaus illustrativ zwei stufenförmige, radial einwärts gerichtete Erweiterungen 834, 836 sowie mindestens ein Führungssteg 839 ausgebildet sind. Zwischen der Erweiterung 834 und dem Wandabschnitt 813 ist eine erste als Druckfeder ausgebildete Rückstellfeder 888 angeordnet und zwischen der Erweiterung 836 und dem Wandabschnitt 818 ist eine zweite als Druckfeder ausgebildete Rückstellfeder 889 angeordnet.

Bei einem Verdrehen der Betätigungshülse 710 relativ zum Tragring 712 und den Mitnahmegliedern 725 werden die Rückstellfedern 888, 889 komprimiert oder ausgedehnt. Hierbei wird der Schiebesteg 828 mit seiner Schiebefläche 829 an dem Führungssteg 839 entlang verfahren und somit wie bei Fig. 7 beschrieben gegen oder durch die Kraft der Druckfeder 252 der Werkzeugaufnahme 150 von Fig. 7 axial verfahren.

## Patentansprüche

1. Handwerkzeugmaschine (100) mit einer Werkzeugaufnahme (150) zur Aufnahme mindestens eines ersten Werkzeugs (170, 180), das einen mit einer ersten Kupplungskontur (175, 185) versehenen Schaft (176, 186) aufweist, der drehfest mit der Werkzeugaufnahme (150) verbindbar ist, und mit einem Schlagwerk (130) zum schlagenden Antrieb des mit der Werkzeugaufnahme (150) verbundenen ersten Werkzeugs (170, 180) in axialer Richtung der Werkzeugaufnahme (150) in einem der Handwerkzeugmaschine (100) zugeordneten Schlagbetrieb, wobei die Werkzeugaufnahme (150) eine Verriegelungshülse (250) zur Verriegelung des ersten Werkzeugs (170, 180) in der Werkzeugaufnahme (150) aufweist, wobei ein drehfest mit der Werkzeugaufnahme (150) verbindbarer Spannfutteradapter (300; 700) zur Aufnahme mindestens eines zweiten Werkzeugs (190) vorgesehen ist, das einen mit einer zweiten Kupplungskontur (195) versehenen Schaft (196) aufweist, der drehfest mit dem Spannfutteradapter (300; 700) verbindbar ist, **dadurch gekennzeichnet, dass** der Spannfutteradapter (300; 700) axial vor der Verriegelungshülse (250) und axial hinter der Verriegelungshülse (250) auf der Werkzeugaufnahme (150) zentriert ist.

2. Handwerkzeugmaschine nach Anspruch 1, **dadurch gekennzeichnet, dass** das erste Werkzeug (170, 180) zum Schlagbohren oder Schrauben und das zweite Werkzeug (190) zum Bohren ausgebildet ist.

3. Handwerkzeugmaschine nach Anspruch 1 oder 2, **dadurch gekennzeichnet, dass** der Schaft (176, 186) des ersten Werkzeugs (170, 180) einen kreisförmigen Querschnitt mit mindestens zwei diametral einander gegenüberliegenden, radialen Erweiterungen oder einen Mehrkant-Querschnitt aufweist, und dass der Schaft (196) des zweiten Werkzeugs (190) einen kreisförmigen Querschnitt aufweist.

4. Handwerkzeugmaschine nach einem der vorhergehenden Ansprüche, **dadurch gekennzeichnet, dass** das erste Werkzeug (170, 180) ein SDS-Mini-Werkzeug oder ein HEX-Werkzeug ist.

5. Handwerkzeugmaschine nach einem der vorhergehenden Ansprüche, **dadurch gekennzeichnet, dass** das zweite Werkzeug (190) ein Rundschaftbohrer ist.

6. Handwerkzeugmaschine nach einem der vorhergehenden Ansprüche, **dadurch gekennzeichnet, dass** die Verriegelungshülse (250) zur Verriegelung des ersten Werkzeugs (170, 180) in der Werkzeugaufnahme (150) federbelastet ist.

7. Handwerkzeugmaschine nach einem der vorhergehenden Ansprüche, **dadurch gekennzeichnet, dass** der Spannfutteradapter (300; 700) einen mit der ersten Kupplungskontur (175, 185) versehenen Mitnahmeschaft (320; 720) zur drehfesten Verbindung mit der Werkzeugaufnahme (150) aufweist.

8. Handwerkzeugmaschine nach Anspruch 6 und 7, **dadurch gekennzeichnet, dass** der Spannfutteradapter (300; 700) eine Betätigungshülse (310; 710) zur Verriegelung des Mitnahmeschafts (320; 720) in der Werkzeugaufnahme (150) aufweist, die zur Betätigung der federbelasteten Verriegelungshülse (250) ausgebildet ist.

9. Handwerkzeugmaschine nach Anspruch 8, **dadurch gekennzeichnet, dass** die Betätigungshülse (310; 710) ein Mitnahmeglied (325; 725) zur Entriegelung der Werkzeugaufnahme (150) durch eine Mitnahme der federbelasteten Verriegelungshülse (250) in axialer Richtung aufweist.

10. Handwerkzeugmaschine nach Anspruch 8 oder 9, **dadurch gekennzeichnet, dass** die Betätigungshülse (310) mit einer Rückstellfeder (327) verbunden ist, die die Betätigungshülse (310) axial in Richtung des Spannfutteradapters (300) beaufschlagt, wobei die Betätigungshülse (310) zur Betätigung der federbelasteten Verriegelungshülse (250) gegen eine von der Rückstellfeder (327) bereit gestellte Rückstellkraft axial in Richtung der Verriegelungshülse (250) verschiebbar ist.

11. Handwerkzeugmaschine nach Anspruch 8 oder 9, **dadurch gekennzeichnet, dass** die Betätigungshülse (710) zur Betätigung der federbelasteten Verriegelungshülse (250) um eine dem Spannfutteradapter (700) zugeordnete Längsachse (702) drehbar ist.

12. Handwerkzeugmaschine nach einem der vorhergehenden Ansprüche, **dadurch gekennzeichnet, dass** das Schlagwerk (130) ein Hammerschlagwerk ist.

13. Handwerkzeugmaschine nach Anspruch 12, **dadurch gekennzeichnet, dass** das Schlagwerk (130) einen Schlagbolzen (204) aufweist, der dazu ausgebildet ist, das erste Werkzeug (170, 180) oder den Spannfutteradapter (300; 700) schlagend anzutreiben.

14. Handwerkzeugmaschine nach einem der vorhergehenden Ansprüche, die nach Art eines Bohrhammers mit Schrauberfunktion ausgebildet ist.

15. Handwerkzeugmaschine nach einem der Ansprüche 1 bis 13, die nach Art eines Akku-Schraubers mit integriertem Hammerschlagwerk ausgebildet ist.

16. Spannfutteradapter (300; 700) für eine Handwerkzeugmaschine (100), die eine Werkzeugaufnahme (150) zur Aufnahme mindestens eines ersten Werkzeugs (170, 180) aufweist, das einen mit einer ersten Kupplungskontur (175, 185) versehenen Schaft (176, 186) aufweist, der drehfest mit der Werkzeugaufnahme (150) verbindbar ist, und die mit einem Schlagwerk (130) zum schlagenden Antrieb des mit der Werkzeugaufnahme (150) verbundenen, ersten Werkzeugs (170, 180) in axialer Richtung der Werkzeugaufnahme (150) in einem der Handwerkzeugmaschine (100) zugeordneten Schlagbetrieb versehen ist, wobei die Werkzeugaufnahme (150) eine Verriegelungshülse (250) zur Verriegelung des ersten Werkzeugs (170, 180) in der Werkzeugaufnahme (150) aufweist, wobei der Spannfutteradapter (300; 700) drehfest mit der Werkzeugaufnahme (150) verbindbar ist und zur Aufnahme mindestens eines zweiten Werkzeugs (190) vorgesehen ist, das einen mit einer zweiten Kupplungskontur (195) versehenen Schaft (196) aufweist, der drehfest mit dem Spannfutteradapter (300; 700) verbindbar ist, **dadurch gekennzeichnet, dass** der Spannfutteradapter (300; 700) axial vor der Verriegelungshülse (250) und axial hinter der Verriegelungshülse (250) auf der Werkzeugaufnahme (150) zentrierbar ist.

## Claims

1. Hand-held power tool (100) having a tool receptacle (150) for receiving at least one first tool (170, 180) which has a shank (176, 186) which is provided with a first coupling contour (175, 185) and which can be connected to the tool receptacle (150) for conjoint rotation, and having a percussion mechanism (130) for percussively driving the first tool (170, 180), which is connected to the tool receptacle (150), in the axial direction of the tool receptacle (150) in a percussion mode assigned to the hand-held power tool (100), wherein the tool receptacle (150) has a locking sleeve (250) for locking the first tool (170, 180) in the tool receptacle (150), wherein a chuck adapter (300; 700) which can be connected to the tool receptacle (150) for conjoint rotation is provided for receiving at least one second tool (190) which has a shank (196) which is provided with a second coupling contour (195) and which can be connected to the chuck adapter (300; 700) for conjoint rotation, **characterized in that** the chuck adapter (300; 700) is centred on the tool receptacle (150) axially in front of the locking sleeve (250) and axially behind the locking sleeve (250).

2. Hand-held power tool according to Claim 1, **characterized in that** the first tool (170, 180) is designed for percussion drilling or screwing, and the second tool (190) is designed for drilling.

3. Hand-held power tool according to Claim 1 or 2, **characterized in that** the shank (176, 186) of the first tool (170, 180) has a circular cross section with at least two radial widenings which are situated diametrically opposite one another, or a polygonal cross section, and **in that** the shank (196) of the second tool (190) has a circular cross section.

4. Hand-held power tool according to one of the preceding claims, **characterized in that** the first tool (170, 180) is an SDS mini-tool or a HEX tool.

5. Hand-held power tool according to one of the preceding claims, **characterized in that** the second tool (190) is a round shank drill bit.

6. Hand-held power tool according to one of the preceding claims, **characterized in that** the locking sleeve (250) is spring-loaded in order to lock the first tool (170, 180) in the tool receptacle (150).

7. Hand-held power tool according to one of the preceding claims, **characterized in that** the chuck adapter (300; 700) has a driving shank (320; 720) which is provided with the first coupling contour (175, 185) and is intended to be connected to the tool receptacle (150) for conjoint rotation.

8. Hand-held power tool according to Claims 6 and 7, **characterized in that** the chuck adapter (300; 700) has an actuating sleeve (310; 710) for locking the driving shank (320; 720) in the tool receptacle (150), said actuating sleeve being designed to actuate the spring-loaded locking sleeve (250).

9. Hand-held power tool according to Claim 8, **characterized in that** the actuating sleeve (310; 710) has a driving member (325; 725) for unlocking the tool receptacle (150) by driving the spring-loaded locking sleeve (250) in the axial direction.

10. Hand-held power tool according to Claim 8 or 9, **characterized in that** the actuating sleeve (310) is connected to a resetting spring (327) which loads the actuating sleeve (310) axially in the direction of the chuck adapter (300), wherein, for actuating the spring-loaded locking sleeve (250) against a resetting force provided by the resetting spring (327), the actuating sleeve (310) is displaceable axially in the direction of the locking sleeve (250).

11. Hand-held power tool according to Claim 8 or 9, **characterized in that**, for actuating the spring-loaded locking sleeve (250), the actuating sleeve (710) can be rotated about a longitudinal axis (702) assigned to the chuck adapter (700).

12. Hand-held power tool according to one of the preceding claims, **characterized in that** the percussion mechanism (130) is a hammer percussion mechanism.

13. Hand-held power tool according to Claim 12, **characterized in that** the percussion mechanism (130) has a percussion bolt (204) which is designed to percussively drive the first tool (170, 180) or the chuck adapter (300; 700).

14. Hand-held power tool according to one of the preceding claims, which is designed in the manner of a hammer drill with screwdriver function.

15. Hand-held power tool according to one of Claims 1 to 13, which is designed in the manner of a cordless screwdriver with integrated hammer percussion mechanism.

16. Chuck adapter (300; 700) for a hand-held power tool (100) which has a tool receptacle (150) for receiving at least one first tool (170, 180) which has a shank (176, 186) which is provided with a first coupling contact (175, 185) and which can be connected to the tool receptacle (150) for conjoint rotation, and said hand-held power tool being provided with a percussion mechanism (130) for percussively driving the first tool (170, 180), which is connected to the tool receptacle (150), in the axial direction of the tool receptacle (150) in a percussion mode assigned to the hand-held power tool (100), wherein the tool receptacle (150) has a locking sleeve (250) for locking the first tool (170, 180) in the tool receptacle (150), wherein the chuck adapter (300; 700) can be connected to the tool receptacle (150) for conjoint rotation and is provided for receiving at least one second tool (190) which has a shank (196) which is provided with a second coupling contour (195) and which can be connected to the chuck adapter (300; 700) for conjoint rotation, **characterized in that** the chuck adapter (300; 700) can be centred on the tool receptacle (150) axially in front of the locking sleeve (250) and axially behind the locking sleeve (250).

## Revendications

1. Machine-outil portative (100) comprenant un logement d'outil (150) destiné à recevoir au moins un premier outil (170, 180) qui comprend une queue (176, 186) dotée d'un premier contour d'accouplement (175, 185), laquelle queue peut être reliée de manière solidaire en rotation au logement d'outil (150), et un mécanisme de percussion (130) pour l'entraînement en percussion du premier outil (170, 180) relié au logement d'outil (150) dans la direction axiale du logement d'outil (150) dans un fonctionnement de percussion associé à la machine-outil portative (100), dans laquelle le logement d'outil (150) comprend une douille de verrouillage (250) pour le verrouillage du premier outil (170, 180) dans le logement d'outil (150), dans laquelle un adaptateur de mandrin de serrage (300 ; 700) pouvant être relié de manière solidaire en rotation au logement d'outil (150) est prévu pour le logement d'au moins un deuxième outil (190) qui comprend une queue (196) dotée d'un deuxième contour d'accouplement (195), laquelle queue peut être reliée de manière solidaire en rotation à l'adaptateur de mandrin de serrage (300 ; 700), **caractérisée en ce que** l'adaptateur de mandrin de serrage (300 ; 700) est centré sur le logement d'outil (150) axialement devant la douille de verrouillage (250) et axialement derrière la douille de verrouillage (250).

2. Machine-outil portative selon la revendication 1, **caractérisée en ce que** le premier outil (170, 180) est conçu pour le perçage à percussion ou le vissage et le deuxième outil (190) est conçu pour le perçage.

3. Machine-outil portative selon la revendication 1 ou 2, **caractérisée en ce que** la queue (176, 186) premier outil (170, 180) présente une section transversale circulaire dotée d'au moins deux élargissements radiaux diamétralement opposés l'un à l'autre ou une section transversale polygonale, et **en ce que** la queue (196) du deuxième outil (190) présente une section transversale circulaire.

4. Machine-outil portative selon l'une des revendications précédentes, **caractérisée en ce que** le premier outil (170, 180) est un mini-outil SDS ou un outil HEX.

5. Machine-outil portative selon l'une des revendications précédentes, **caractérisée en ce que** le deuxième outil (190) est un foret à queue cylindrique.

6. Machine-outil portative selon l'une des revendications précédentes, **caractérisée en ce que** la douille de verrouillage (250) est sollicitée par ressort pour le verrouillage du premier outil (170, 180) dans le logement d'outil (150).

7. Machine-outil portative selon l'une des revendications précédentes, **caractérisée en ce que** l'adaptateur de mandrin de serrage (300 ; 700) comprend une queue d'entraînement (320 ; 720) dotée du premier contour d'accouplement (175, 185) pour la liaison solidaire en rotation au logement d'outil (150).

8. Machine-outil portative selon les revendications 6 et 7, **caractérisée en ce que** l'adaptateur de mandrin de serrage (300 ; 700) comprend une douille d'actionnement (310 ; 710) pour le verrouillage de la queue d'entraînement (320 ; 720) dans le logement d'outil (150), laquelle douille d'actionnement est conçue pour l'actionnement de la douille de verrouillage (250) sollicitée par ressort.

9. Machine-outil portative selon la revendication 8, **caractérisée en ce que** la douille d'actionnement (310 ; 710) comprend un organe d'entraînement (325 ; 725) pour le déverrouillage du logement d'outil (150) par un entraînement de la douille de verrouillage (250) sollicitée par ressort dans la direction axiale.

10. Machine-outil portative selon la revendication 8 ou 9, **caractérisée en ce que** la douille d'actionnement (310) est reliée à un ressort de rappel (327) qui sollicite la douille d'actionnement (310) axialement dans la direction de l'adaptateur de mandrin de serrage (300), la douille d'actionnement (310) étant déplaçable axialement dans la direction de la douille de verrouillage (250) à l'encontre d'une force de rappel produite par le ressort de rappel (327) pour l'actionnement de la douille de verrouillage (250) sollicitée par ressort.

11. Machine-outil portative selon la revendication 8 ou 9, **caractérisée en ce que** la douille d'actionnement (710) peut tourner autour d'un axe longitudinal (702) associé à l'adaptateur de mandrin de serrage (700) pour l'actionnement de la douille de verrouillage (250) sollicitée par ressort.

12. Machine-outil portative selon l'une des revendications précédentes, **caractérisée en ce que** le mécanisme de percussion (130) est un mécanisme de percussion à marteau.

13. Machine-outil portative selon la revendication 12, **caractérisée en ce que** le mécanisme de percussion (130) comprend un percuteur (204) qui est conçu pour entraîner en percussion le premier outil (170, 180) ou l'adaptateur de mandrin de serrage (300 ; 700).

14. Machine-outil portative selon l'une des revendications précédentes, qui est réalisée à la manière d'un marteau perforateur à fonction de vissage.

15. Machine-outil portative selon l'une des revendications 1 à 13, qui est réalisée à la manière d'une visseuse sans fil à mécanisme de percussion à marteau intégré.

16. Adaptateur de mandrin de serrage (300 ; 700) pour une machine-outil portative (100) qui comprend un logement d'outil (150) destiné à recevoir au moins un premier outil (170, 180) qui comprend une queue (176, 186) dotée d'un premier contour d'accouplement (175, 185), laquelle queue peut être reliée de manière solidaire en rotation au logement d'outil (150), et laquelle machine-outil portative est dotée d'un mécanisme de percussion (130) pour l'entraînement en percussion du premier outil (170, 180) relié au logement d'outil (150) dans la direction axiale du logement d'outil (150) dans un fonctionnement de percussion associé à la machine-outil portative (100), le logement d'outil (150) comprenant une douille de verrouillage (250) pour le verrouillage du premier outil (170, 180) dans le logement d'outil (150), l'adaptateur de mandrin de serrage (300 ; 700) pouvant être relié de manière solidaire en rotation au logement d'outil (150) et étant prévu pour le logement d'au moins un deuxième outil (190) qui comprend une queue (196) dotée d'un deuxième contour d'accouplement (195), laquelle queue peut être reliée de manière solidaire en rotation à l'adaptateur de mandrin de serrage (300 ; 700), **caractérisé en ce que** l'adaptateur de mandrin de serrage (300 ; 700) peut être centré sur le logement d'outil (150) axialement devant la douille de verrouillage (250) et axialement derrière la douille de verrouillage (250).
